# EUROPEAN PATENT APPLICATION

(11) **EP 4 606 596 A1**
(43) Date of publication of application: **27.08.2025**
(21) Application number: 25153593.6
(22) Date of filing: 23.01.2025
(51) Int. Cl.: B60B 3/10, B60B 7/06, B60B 7/08, B60B 7/18

(54) **VEHICLE WHEEL STRUCTURE**

(30) Priority: 26.02.2024 JP 2024026727
(71) Applicant: TOYOTA JIDOSHA KABUSHIKI KAISHA, Aichi-ken, 471-8571 (JP); Kabushiki Kaisha Tokai Rika Denki Seisakusho, Niwa-gun, Aichi 480-0195 (JP)
(72) Inventor: ISHIKAWA, Tomoyuki, Toyota-shi, 471-8571 (JP); KUSUNOKI, Hideya, Toyota-shi, 471-8571 (JP); HISHINUMA, Takuya, Toyota-shi, 471-8571 (JP); NAGAMINE, Masanori, Ohguchi-cho, 480-0195 (JP); ITO, Satoshi, Ohguchi-cho, 480-0195 (JP); HONDA, Masahiro, Ohguchi-cho, 480-0195 (JP); MATOBA, Keisuke, Ohguchi-cho, 480-0195 (JP)
(74) Representative: J A Kemp LLP

(57) **Abstract**

A vehicle wheel structure (10) includes: a wheel (11) configured to support a tire and be assembled to a vehicle; and a wheel mounting member (13) that is mounted on the wheel (11). The wheel mounting member (13) includes a body section (131), a main engagement section (134) that is provided to the body section (131) and engages with an engagement target section (118) of the wheel (11), and a sub-engagement section (136) that is provided in a low-rigidity region (R) in which the rigidity relatively decreases in the body section (131) in a state in which the body section (131) is fixed to the wheel (11) by the main engagement section (134), the sub-engagement section (136) engaging with an engageable target section (119) of the wheel (11), the engageable target section (119) being different from the engagement target section (118).

## Description

### BACKGROUND OF THE INVENTION

### 1. Field of the Invention

The present disclosure relates to a vehicle wheel structure.

### 2. Description of Related Art

For example, a vehicle wheel structure disclosed in Japanese Patent No. 6927079 has been known. In the vehicle wheel structure, a plurality of wheel caps formed to correspond to air openings provided to a wheel is fixed at the respective air openings.

### SUMMARY OF THE INVENTION

In recent years, to increase the design quality and the aerodynamic characteristics of a wheel, a wheel mounting member such as an accessory piece including a wheel cover and the wheel cap described above has been sometimes mounted on the wheel. In the case, a plate shape is sometimes adopted as the shape of the wheel mounting member in addition to a frame shape like the wheel cap described above. In most cases, an engagement section provided at an end of a body section formed to correspond to an air opening engages with an engagement target section provided to a spoke that forms an air opening of the wheel and the wheel mounting member is hereby fixed not to easily fall apart.

However, in a case where the wheel mounting member is fixed to the wheel by only the engagement between the engagement target section and the engagement section, the wheel mounting member may have a region in which the rigidity relatively decreases. For example, this may bring about deflection deformation such as lifting due to the application of external force caused by airflow, vibration, or the like entailed by a traveling vehicle. In a case where such deflection deformation comes about, for example, abnormal sound caused by the repeated abutment between the wheel mounting member and the wheel may be generated.

The present disclosure provides a vehicle wheel structure that makes it possible to reduce, in a case where a wheel mounting member is mounted on a wheel, deflection deformation that comes about in a region in which the rigidity relatively decreases in a state in which the wheel mounting member is mounted on the wheel.

A vehicle wheel structure according to a first aspect of the present disclosure includes: a wheel configured to support a tire and be assembled to a vehicle; and a wheel mounting member that is mounted on the wheel. The wheel mounting member includes a body section, a main engagement section that is provided to the body section and engages with an engagement target section of the wheel, and a sub-engagement section that is provided in a low-rigidity region in which the rigidity relatively decreases in the body section in a state in which the body section is fixed to the wheel by the main engagement section. The sub-engagement section engages with an engageable target section of the wheel. The engageable target section is different from the engagement target section.

In the vehicle wheel structure according to the first aspect of the present disclosure, the low-rigidity region may be a region adjacent to a region in which the main engagement section is provided in the body section.

In the vehicle wheel structure according to the first aspect of the present disclosure, in a case where the body section is provided with a pair of the main engagement sections, the low-rigidity region may be present between respective regions in which the pair of the main engagement sections are respectively provided.

In the vehicle wheel structure according to the first aspect of the present disclosure, the low-rigidity region may be a region including a hole formation section having a through-hole that is provided in the body section.

In the vehicle wheel structure according to the first aspect of the present disclosure, the hole formation section may have the through-hole that is provided to correspond to an air opening provided to the wheel in the state in which the body section is fixed to the wheel. The air opening causes air to flow through the air opening.

In the vehicle wheel structure according to the first aspect of the present disclosure, the hole formation section may have the through-hole that is provided to accommodate a portion of a spoke included in the wheel in the state in which the body section is fixed to the wheel.

In the vehicle wheel structure according to the first aspect of the present disclosure, the low-rigidity region may be a region including a decoration section in which a surface of the body section is decorated in the state in which the body section is fixed to the wheel. The surface corresponds to the outside of the vehicle.

In the vehicle wheel structure according to the first aspect of the present disclosure, the sub-engagement section may include a support section that is provided to stand with respect to the body section, an engagement lug that is supported by the support section and provided to engage with the engageable target section, and an abutment section that abuts the engageable target section more preferentially than the engagement lug in the state in which the body section is fixed to the wheel.

In the vehicle wheel structure according to the first aspect of the present disclosure, the abutment section may be a rib that is provided to couple the support section and the engagement lug.

In the vehicle wheel structure according to the first aspect of the present disclosure, the engagement target section may be an engagement target hole having a long-hole shape. The engagement target hole may be provided to have the longitudinal direction along a radial direction of the wheel.

In the vehicle wheel structure according to the first aspect of the present disclosure, the wheel mounting member may be provided by using a resin material.

In the vehicle wheel structure according to the first aspect of the present disclosure, the body section may be provided to cover the whole of a surface of the wheel in the state in which the body section is mounted on the wheel. The surface corresponds to the outside of the vehicle.

In the vehicle wheel structure according to the first aspect of the present disclosure, the body section may include a plurality of body formation members, and a coupling section that couples the body formation members along the circumferential direction of a disc included in the wheel in a state in which the body section is mounted on the wheel.

In the vehicle wheel structure according to the first aspect of the present disclosure, the coupling section may couple the body formation members in the middle section of the disc in the state in which the body section is mounted on the wheel.

A vehicle wheel structure according to the present disclosure makes it possible to provide a sub-engagement section in a low-rigidity region in which deflection deformation easily comes about. Thus, even in a situation in which deflection deformation comes about in the low-rigidity region in a state in which a body section, that is, a wheel mounting member is mounted on a wheel by a main engagement section, the sub-engagement section engages with an engageable target section to allow the deflection deformation in the low-rigidity region to be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram for describing a vehicle wheel structure;
FIG. 2 is a diagram for describing a wheel;
FIG. 3 is an enlarged view for describing an engagement target section of the wheel;
FIG. 4 is a diagram for describing a wheel mounting member;
FIG. 5 is an enlarged view for describing the wheel mounting member;
FIG. 6 is a sectional view taken along a VI-VI section in FIG. 1;
FIG. 7 is an enlarged view for describing a sub-engagement section of the wheel mounting member;
FIG. 8 is a diagram for describing a center engagement section of the wheel mounting member;
FIG. 9 is a diagram illustrating a modification example and describing a decoration section; and
FIG. 10 is a diagram for describing a wheel mounting member according to a modification example.

### DETAILED DESCRIPTION OF EMBODIMENTS

Hereinafter, a vehicle wheel structure according to the present disclosure will be described in detail with reference to the drawings. It is to be noted that the present disclosure can be carried out in various forms in which various modifications and improvements are made based on the knowledge of those who skilled in the art in addition to the following embodiment.

### 1. Embodiment

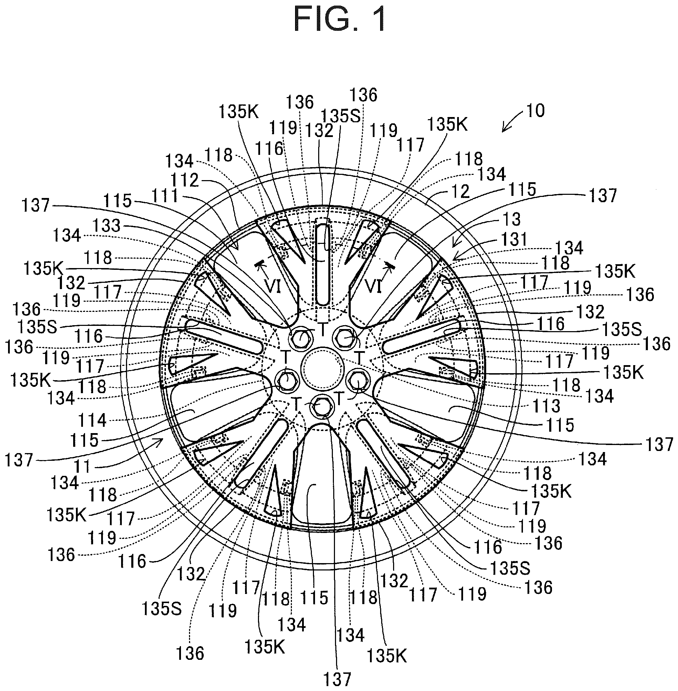

As illustrated in FIG. 1, a vehicle wheel structure 10 according to the present embodiment includes a wheel 11 included in a tire-wheel assembly of a vehicle. The wheel 11 supports a tire 12 and is assembled to the vehicle. The vehicle wheel structure 10 according to the present embodiment then includes a wheel cover 13 serving as a wheel mounting member that is mounted on the wheel 11.

Here, the side on which the vehicle body of the vehicle is located with respect to the wheel 11 when the wheel 11 is assembled to the vehicle will be referred to as "inside" and the opposite side on which the vehicle body is not located will be referred to as "outside". It is to be noted that in the following description, the side of the wheel 11 serving as "outside" is also referred to as a "design surface" in some cases. In addition, in the following description, the direction parallel with the rotation axis passing through the center of the tire-wheel assembly is referred to as an "axial direction" and a direction orthogonal to the rotation axis is referred to as a "radial direction".

The wheel 11 is made of an alloy of aluminum or the like or steel. The wheel 11 is formed to include a disc 111 and a rim 112. The disc 111 is formed to have a circular plate shape. The rim 112 is provided on the outer periphery of the disc 111, has an annular shape, and holds the tire 12. As illustrated in FIG. 1, the wheel 11 is assembled into an unillustrated hub of the vehicle by fastening members T such as hub nuts or hub bolts. It is to be noted that the present embodiment exemplifies a case where the wheel 11 is made of an alloy of aluminum or the like and the disc 111 and the rim 112 are of a one-piece type in which the disc 111 and the rim 112 are integrally formed.

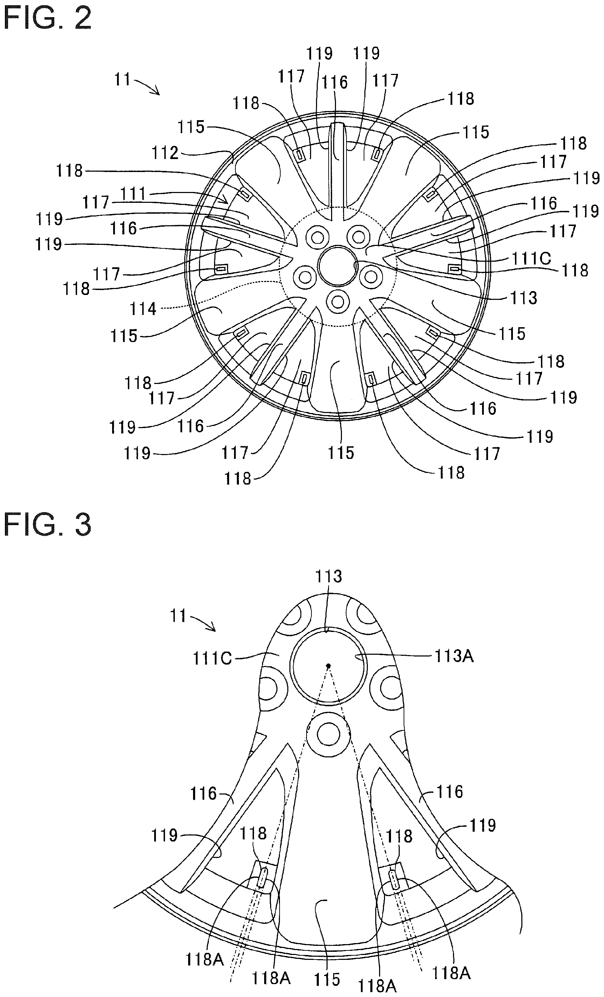

As illustrated in FIG. 2, the disc 111 has a hub hole 113 that is formed to extend through a middle section 111C of the disc 111 along the axial direction. Here, for example, in a case where the wheel cover 13 is not mounted, it is also possible for the hub hole 113 to function as a hole to which an ornament provided to the wheel 11 is attached. In addition, the disc 111 includes a hub attachment section 114 on the inside of the middle section 111C of the disc 111 as illustrated by the dashed line in FIG. 2. The hub attachment section 114 fixes the wheel 11 to the hub of the vehicle. It is to be noted that the present embodiment exemplifies a case where the hub attachment section 114 has a cylindrical shape, but the shape of the hub attachment section 114 is not limited to the cylindrical shape.

In addition, the disc 111 includes thick spokes 115 and thin fin spokes 116 on the outside. The spokes 115 and the fin spokes 116 couple the rim 112 and the hub attachment section 114. The present embodiment exemplifies a case where the disc 111 includes the five spokes 115 radially extending from the hub attachment section 114 and the five fin spokes 116 radially extending between the adjacent spokes 115 from the hub attachment section 114.

In addition, the disc 111 has air openings 117 that are each formed between the adjacent spoke 115 and fin spoke 116 and each cause air to flow through the air opening 117. As illustrated in FIG. 2, the present embodiment exemplifies a case where the disc 111 has ten air openings 117 defined by the spokes 115 and the fin spokes 116, and the hub attachment section 114 and the rim 112.

It is to be noted that each of the air openings 117 may be defined, for example, by two spokes 115 and the rim 112, may be defined by two fin spokes 116 and the rim 112, or may be defined by one spoke 115, one fin spoke 116, and the rim 112 depending on the arrangement and the shapes of the spokes 115 and the fin spokes 116. In addition, each of the air openings 117 may be defined, for example, by two spokes 115 and the hub attachment section 114, may be defined by two fin spokes 116 and the hub attachment section 114, or may be defined by one spoke 115, one fin spoke 116, and the hub attachment section 114.

In addition, the disc 111 has engagement target holes 118 serving as engagement target sections. Each of the engagement target holes 118 is formed to have, for example, a long-hole shape and engages with a main engagement section 134 provided to the wheel cover 13 described later. The engagement target holes 118 according to the present embodiment are provided to a coupling portions between the spokes 115 and the rim 112. It is to be noted that each of the engagement target holes 118 is incorporated, for example, into the spoke 115 instead of being provided to the coupling portion between the spoke 115 and the rim 112 in some cases. Here, the engagement target hole 118 is formed to have the longitudinal direction along a radial direction. The present embodiment therefore exemplifies a case where each of the engagement target holes 118 is formed to have a side surface 118A parallel with a line that passes through the center of the disc 111 among the radial directions orthogonal to the rotation axis, that is, the "radius" as illustrated in FIG. 3.

This makes it possible to prevent a useless load (stress) from acting on the main engagement section 134 from the engagement target hole 118 in a state in which the main engagement section 134 is engaged. In addition, it is possible to prevent a useless load (stress) from acting on the main engagement section 134 from the engagement target hole 118, for example, even in a situation in which the wheel cover 13 that is a wheel mounting member, and an accessory part 14 described later are moved in a radial direction by centrifugal force acting on the wheel cover 13. It is to be noted that the shape and the disposition of the engagement target hole 118 are not limited to these.

Furthermore, as illustrated in FIG. 2, the disc 111 includes engageable target sections 119 different from the engagement target holes 118 serving as engagement target sections. The engageable target sections 119 are each provided between the adjacent engagement target holes 118 in the circumferential direction of the disc 111 included in the wheel 11 and each engage with a sub-engagement section 136 provided to the wheel cover 13 described later. Here, in the present embodiment, the engagement target hole 118 is provided to the coupling portion between the spoke 115 and the rim 112 and the engageable target section 119 is thus provided, for example, to the fin spoke 116.

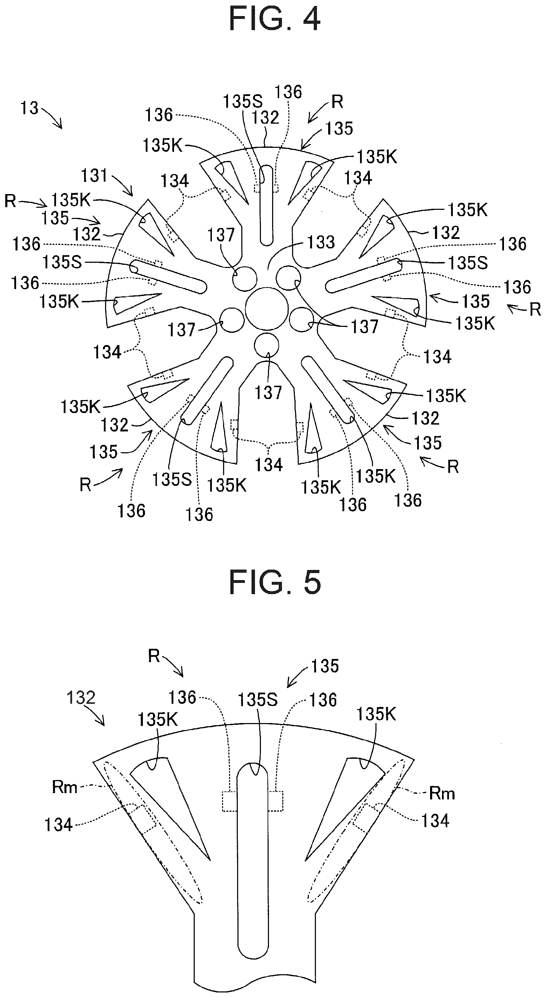

As illustrated in FIG. 1, the wheel cover 13 included in the vehicle wheel structure 10 is formed to cover the whole of a design surface that is a surface corresponding to the outside of the wheel 11, that is, to cover the air openings 117 provided to the wheel 11. The wheel cover 13 is mounted on the wheel 11. As illustrated in FIG. 4, the wheel cover 13 includes a body section 131 as a main element. Here, the wheel cover 13 is formed by using, for example, a resin material.

The body section 131 according to the present embodiment includes a plurality of body formation members 132 and a coupling section 133 that couples the body formation members 132 in the middle section 111C of the disc 111 along the circumferential direction of the disc 111 in a state in which the body section 131 is mounted on the wheel 11. This causes the body formation members 132 to be integrated by the coupling section 133. The body section 131 having a disk shape is mounted on the wheel 11 to cover the whole of the design surface of the disc 111 of the wheel 11.

Here, the present embodiment exemplifies a case where the body section 131 includes five body formation members 132. Specifically, in a case where two air openings 117 that are adjacent to each other with the fin spoke 116 in between, on the disc 111 of the wheel 11 are used in pairs, the body section 131 includes five body formation members 132 to cover the five respective pairs of air openings 117 present on the whole of the disc 111. It is to be noted that the number of body formation members 132 is not limited to this. It is sufficient if the number of body formation members 132 is one or more.

In addition, the following description exemplifies a case where the coupling section 133 couples the body formation members 132 in the middle section 111C of the disc 111 in a state in which the body section 131 is mounted on the wheel 11. However, needless to say, it is also possible for the coupling section 133 to couple the body formation members 132 at a position other than the middle section 111C of the disc 111, for example, depending on the shape of the disc 111 of the wheel 11 or the three-dimensional shapes of the spokes 115 and the fin spokes 116 if described in more detail. Even in the case, the body formation members 132 are integrated by the coupling section 133 and it is possible to mount the body section 131 having a disk shape on the disc 111 of the wheel 11.

The body section 131, that is, each of the body formation members 132 includes the main engagement section 134 formed to engage with the engagement target hole 118 that is an engagement target section of the wheel 11. As illustrated in FIG. 5, in a case where the body formation member 132 is fixed to the disc 111 of the wheel 11, the main engagement sections 134 are disposed in regions Rm near the ends of the body formation member 132 in the circumferential direction of the disc 111. Here, the present embodiment exemplifies a case where the two paired main engagement sections 134 are provided to be respectively disposed in the regions Rm near both of the respective ends of the body formation member 132.

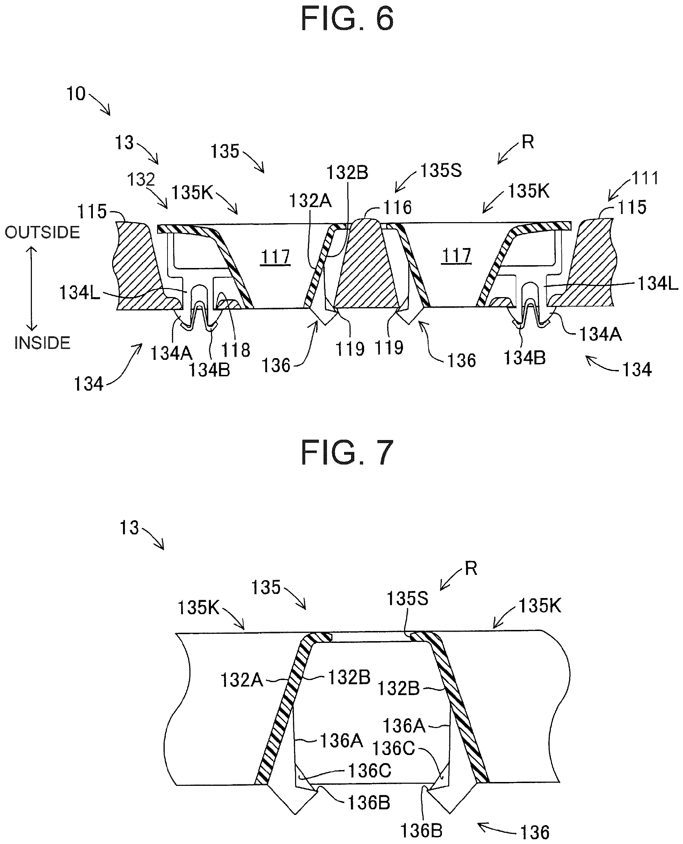

As illustrated in FIG. 6, each of the main engagement sections 134 includes a leg section 134L and a lug section 134A. The leg section 134L is provided to stand on the inside of the body formation member 132 and supports the lug section 134A in a state in which the body formation member 132 is fixed to the disc 111 of the wheel 11. The lug section 134A is provided on the tip side of the leg section 134L, that is, the side on which the lug section 134A faces the engagement target hole 118. The lug section 134A engages with the engagement target hole 118.

Here, the main engagement section 134 is also formed by using a resin material as with the body section 131, that is, the body formation member 132. The main engagement section 134 is therefore retained in a state in which the main engagement section 134 is engaged with the engagement target hole 118 and is resisting force acting on the wheel cover 13 toward the outside due to airflow or the like to prevent the wheel cover 13 from falling apart in a case where the wheel cover 13 is mounted on the wheel 11. In the case, the main engagement section 134 or the lug section 134A in particular sometimes undergoes deterioration in terms of material characteristics such as what is called thermal creep or stress relaxation.

As illustrated in FIG. 6, a backup clip 134B made of a thin plate of metal is therefore assembled onto the main engagement section 134 or more specifically the lug section 134A. This makes it possible to secure the rigidity of the main engagement section 134 and the main engagement section 134 prevents the wheel cover 13 from falling apart in a state in which the main engagement section 134 is engaged with the engagement target hole 118.

In addition, the body section 131, that is, each of the body formation members 132 includes a hole formation section 135 as illustrated in FIG. 1, FIG. 4, and FIG. 5. The hole formation section 135 has through-holes 135K and a through-hole 135S formed on a general portion (general surface) having a plate shape in the body formation member 132. The through-holes 135K are each formed to correspond to the air opening 117 that causes air to flow through the air opening 117 in a state in which the body section 131, that is, the body formation member 132 is fixed to the disc 111 of the wheel 11. The through-hole 135S is formed to accommodate part of the fin spoke 116 included in the wheel 11 in a state in which the body section 131, that is, the body formation member 132 is fixed to the disc 111 of the wheel 11.

Here, the hole formation section 135 is provided in the region between the two paired main engagement sections 134 provided in the regions Rm including both of the respective ends of the body formation member 132 in the circumferential direction of the disc 111 (wheel 11) in a state in which the body formation member 132 (body section 131) is fixed to the disc 111 of the wheel 11. Therefore, the hole formation section 135 is provided to relatively decrease the rigidity of the general portion (general surface) having a plate shape that is the region between the two paired main engagement sections 134 in the body formation member 132 (body section 131). That is, the hole formation section 135 is included in the region adjacent to the regions Rm in which the main engagement sections 134 are provided in the body formation member 132 (body section 131) or more specifically a low-rigidity region R present between the respective regions Rm in which the pair of the main engagement sections 134 are respectively provided.

Deflection deformation such as lifting comes about more easily in the low-rigidity region R in a state in which the main engagement sections 134 and the engagement target holes 118 are engaged to mount the wheel cover 13 on the wheel 11. Accordingly, as illustrated in FIG. 4, FIG. 5, and FIG. 6, the sub-engagement sections 136 are provided in the low-rigidity region R in the body section 131 (body formation member 132) in the vehicle wheel structure 10.

The sub-engagement sections 136 are each configured to engage with the engageable target section 119 of the wheel 11 (disc 111) different from the engagement target hole 118 that is an engagement target section of the wheel 11 in the low-rigidity region R in which the rigidity relatively decreases in the body section 131 (body formation member 132) in a case where the body section 131 (body formation member 132) is fixed to the wheel 11 by the main engagement sections 134. In the present embodiment, as illustrated in FIG. 6, the sub-engagement section 136 is provided along the longitudinal direction of the through-hole 135S having a long-hole shape to embrace and engage with the fin spoke 116 to which the engageable target section 119 is provided.

As in an enlarged view of FIG. 7, the sub-engagement section 136 includes support sections 136A, engagement lugs 136B, and abutment sections 136C. The support sections 136A are each provided to stand toward the inside from a back surface 132B of a wall surface 132A of the body formation member 132 (body section 131) that defines and forms the through-hole 135K and the through-hole 135S and each support the engagement lug 136B. The engagement lugs 136B are each formed to project from the support section 136A to the fin spoke 116 in a state in which the body formation member 132 (body section 131) is fixed to the disc 111 of the wheel 11 and each provided to engage with the engageable target section 119. Each of the abutment sections 136C is a thin-plate rib that is provided to couple the support section 136A and the engagement lug 136B. As illustrated in FIG. 6, the abutment sections 136C each abuts the engageable target section 119 more preferentially than the engagement lug 136B in a state in which the body formation member 132 (body section 131) is fixed to the disc 111 of the wheel 11.

Here, the abutment sections 136C of the sub-engagement sections 136 of the vehicle wheel structure 10 abut the engageable target sections 119 in a state in which the wheel cover 13, that is, the body section 131 (body formation members 132) is mounted on the disc 111 of the wheel 11 even in a situation in which the vehicle is traveling. The abutment sections 136C of the sub-engagement sections 136 hereby prevent deflection deformation such as lifting from coming about in the low-rigidity regions R in the body section 131 (body formation members 132), for example, in a normal state in which such great external force that causes the wheel cover 13, that is, the body section 131 (body formation members 132) to fall apart from the wheel 11 does not act.

In addition, in a case where such great external force that causes the wheel cover 13, that is, the body section 131 (body formation members 132) to fall apart from the wheel 11 acts on the sub-engagement sections 136 of the vehicle wheel structure 10 in a state in which the wheel cover 13, that is, the body section 131 (body formation members 132) is mounted on the disc 111 of the wheel 11, the engagement lugs 136B engage with the engageable target sections 119. The engagement lugs 136B of the sub-engagement sections 136 hereby prevent the wheel cover 13, that is, the body section 131 (body formation members 132) from falling apart from the wheel 11.

In addition, the wheel cover 13 according to the present embodiment has working holes 137 to which the fastening members T (hub nuts or hub bolts) that are used to assemble the wheel 11 into the hub are inserted to allow for fastening operations. As illustrated in FIG. 4, the working holes 137 are through-holes that are provided to the coupling section 133 and formed along the axial directions.

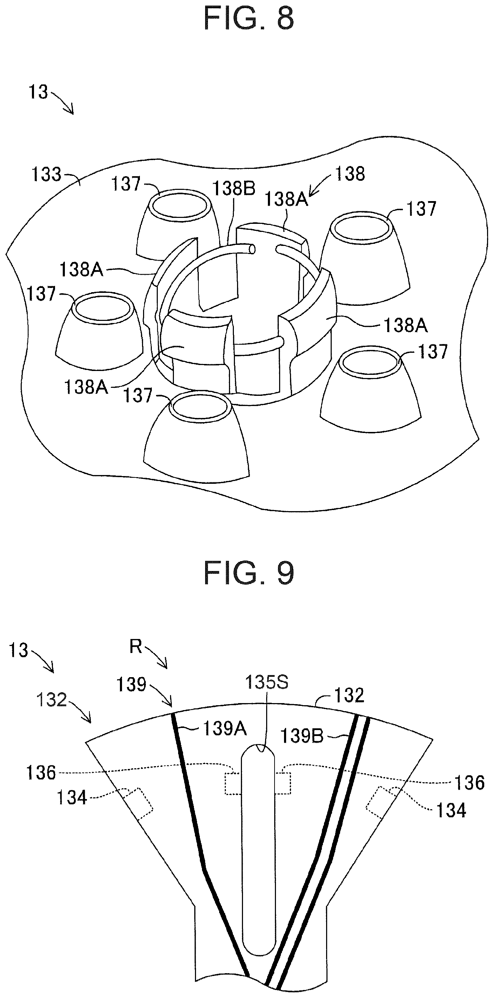

Furthermore, as illustrated in FIG. 8, the wheel cover 13 according to the present embodiment includes a center engagement section 138 that engages with an annular protrusion 113A (see FIG. 3) provided to the hub hole 113. The center engagement section 138 includes center lugs 138A that fit into the protrusion 113A and a wire ring 138B that biases the center lugs 138A toward the protrusion 113A. This allows the center engagement section 138 to fix the wheel cover 13 to the wheel 11 (disc 111) by engaging the center lugs 138A with the protrusion 113A by inserting the center lugs 138A and the wire ring 138B to the hub hole 113 when the wheel cover 13 is mounted.

In the vehicle wheel structure 10 configured in such a way, the wheel cover 13 is mounted on the design surface of the disc 111 of the wheel 11. Specifically, the wheel cover 13 is mounted by the center lugs 138A of the center engagement section 138 and the protrusion 113A of the hub hole 113 engaging with each other to cause the rotation axes of the wheel 11 and the wheel cover 13 to coincide with each other. In addition, the wheel cover 13 is mounted by the lug sections 134A of the main engagement sections 134 engaging with the engagement target holes 118 provided to the disc 111 of the wheel 11 and the abutment sections 136C of the sub-engagement sections 136 abutting the engageable target sections 119 provided to the fin spokes 116 of the disc 111. In the case, the wheel cover 13 is mounted on the disc 111 without falling part chiefly by the lug sections 134A of the main engagement sections 134 backed up by the backup clips 134B engaging with the engagement target holes 118.

Then, when the vehicle travels, the wheel cover 13, that is, the body section 131 (body formation members 132) receives external force caused by airflow entailed by the traveling, vibration entailed by the traveling, or the like. In the case, the body section 131 (body formation members 132) has high rigidity in the region Rm in which the main engagement section 134 is provided. Deflection deformation such as lifting therefore comes about less easily. Deflection deformation such as lifting, however, comes about easily in the low-rigidity region R present between the regions Rm.

The abutment sections 136C of the sub-engagement section 136, however, embrace the fin spoke 116 and abut the engageable target sections 119 for the deflection deformation in the low-rigidity region R. The deflection deformation in the low-rigidity region R is thus reduced. That is, the vehicle wheel structure 10 holds the body section 131 (body formation members 132) to prevent deflection deformation from coming about in the normal state by the abutment sections 136C each formed as a rib abutting the engageable target sections 119.

Here, the vehicle wheel structure 10 is retained in a state in which the engagement lugs 136B of the sub-engagement section 136 are not engaged with the engageable target sections 119 or the engagement lugs 136B of the sub-engagement section 136 are engaged with the engageable target sections 119 with small engagement force, that is, no external force is acting or no great external force is acting in the normal state. A state in which deterioration such as thermal creep or stress relaxation inevitable in terms of material characteristics advances less easily in the engagement lugs 136B is thus retained. Furthermore, the engagement lugs 136B are coupled to the support sections 136A by the abutment sections 136C each formed as a rib. This prevents the engagement lugs 136B from being broken because of a so-called rib effect even in a case where great external force acts on the engagement lugs 136B, for example, in an operation of detaching the wheel cover 13 from the wheel 11 or other operations.

Here, the abutment sections 136C each formed as a rib abut the engageable target sections 119, that is, the fin spoke 116 on the side surfaces in the plate thickness direction in a situation in which the vehicle travels with the wheel cover 13 mounted on the wheel 11 and receive compression force in the plate surface direction as an input caused by vibration or the like. This makes it possible to reduce the influence of deterioration such as thermal creep or stress relaxation on the portion at which each of the abutment sections 136C abuts the engageable target section 119, for example, by adjusting the plate thickness of the abutment section 136C. As a result, it is possible to prevent deflection deformation such as lifting in the low-rigidity region R in the body section 131 (body formation member 132) in the normal state by causing the abutment section 136C to abut the engageable target section 119. In addition, the abutment section 136C attains a so-called damping effect to make it possible to damp useless vibration in the low-rigidity region R and prevent even abnormal sound from being generated.

As can be understood from the description above, the vehicle wheel structure 10 according to the embodiment includes the wheel 11 configured to support the tire 12 and be assembled to the vehicle, and the wheel cover 13 serving as a wheel mounting member that is mounted on the wheel 11. The wheel cover 13 includes the body section 131, the main engagement section 134 that is provided to the body section 131 and engages with the engagement target hole 118 serving as an engagement target section of the wheel 11, and the sub-engagement section 136 that is provided in the low-rigidity region R in which the rigidity relatively decreases in the body section 131 in a case where the body section 131 is fixed to the wheel 11 by the main engagement section 134. The sub-engagement section 136 engages with the engageable target section 119. The engageable target section 119 is different from the engagement target hole 118 of the wheel 11. In the case, the wheel cover 13 is formed by using a resin material.

In the case, the low-rigidity region R is a region adjacent to the regions Rm in which the main engagement sections 134 are provided in the body section 131. In the case, in a case where the body section 131 is provided with the pair of the main engagement sections 134, the low-rigidity region R is located between the respective regions Rm in which the pair of the main engagement sections 134 are respectively provided.

In addition, in the case, the low-rigidity region R is a region including the hole formation section 135 having the through-holes 135K and the through-hole 135S that are formed in the body section 131. In the case, the hole formation section 135 has the through-holes 135K that are formed to correspond to the air openings 117 provided to the wheel 11 in a state in which the body section 131 is fixed to the wheel 11. The air openings 117 cause air to flow through the air openings 117. In addition, in the case, the hole formation section 135 has the through-hole 135S that is formed to accommodate a portion of the fin spoke 116 included in the wheel 11 in a state in which the body section 131 is fixed to the wheel 11.

In addition, in the case, the sub-engagement section 136 includes the support sections 136A that are each provided to stand with respect to the body section 131, the engagement lugs 136B that are each supported by the support section 136A and each provided to engage with the engageable target section 119, and the abutment sections 136C that each abut the engageable target section 119 more preferentially than the engagement lug 136B in a state in which the body section 131 is fixed to the wheel 11. In the case, the abutment section 136C is a rib that is provided to couple the support section 136A and the engagement lug 136B.

Furthermore, in the case, the body section 131 is formed to cover the whole of a surface of the wheel 11 corresponding to the outside of the vehicle in a state in which the body section 131 is mounted on the wheel 11. In the case, the body section 131 includes the body formation members 132 and the coupling section 133 that couples the body formation members 132 along the circumferential direction of the disc 111 that forms the wheel 11 in a state in which the body section 131 is mounted on the wheel 11. In addition, in the case, the coupling section 133 couples the body formation members 132 in the middle section 111C of the disc 111 in a state in which the body section 131 is mounted on the wheel 11.

The vehicle wheel structure 10 makes it possible to provide the sub-engagement sections 136 in the low-rigidity region R in which deflection deformation such as lifting is easily brought about by the application of external force caused by airflow, vibration, or the like entailed by the traveling vehicle. Even in a situation in which deflection deformation comes about in the low-rigidity regions R in a state in which the body section 131 (body formation members 132), that is, the wheel cover 13 is mounted on the wheel 11 by the main engagement sections 134, it is thus possible to reduce deflection deformation coming about in the low-rigidity region R by the sub-engagement sections 136 or specifically the abutment sections 136C engaging with the engageable target sections 119 more preferentially than the engagement lugs 136B.

This makes it possible to prevent abnormal sound caused by the repeated abutment between the body section 131 (body formation members 132) and the disc 111 of the wheel 11 from being generated. In addition, in a case where a state in which the abutment sections 136C are constantly abutting the engageable target sections 119 in a state in which the wheel cover 13 is mounted on the wheel 11 is retained, the abutment sections 136C or the engagement lugs 136B are prevented from repeatedly abutting the engageable target sections 119 in spite of deflection deformation coming about in the low-rigidity regions R. The vehicle wheel structure 10 hereby makes it possible to prevent abnormal sound caused by the abutment between the sub-engagement sections 136 and the engageable target sections 119 from being generated.

### 2. Modification Examples

In the embodiment described above, the hole formation sections 135 each having the through-holes 135K corresponding to the air openings 117 and the through-hole 135S that accommodates part of the fin spoke 116 are provided to the body section 131 (each body formation members 132). That is, the embodiment described above has exemplified a case where the rigidity of a general portion (general surface) of the body section 131 (body formation member 132) to which the hole formation section 135 is provided is relatively lower than the rigidity of each of the regions Rm in which the main engagement sections 134 are provided, that is, a case where the low-rigidity region R includes a region including the hole formation section 135.

In contrast, as illustrated in FIG. 9, to increase design quality and merchantability more, it is possible to provide the body section 131 (body formation member 132) of the wheel cover 13 with a decoration section 139 in which the surface of the body section 131 (body formation member 132) corresponding to the outside is decorated in a state in which the wheel cover 13 is mounted on the wheel 11. As illustrated by the thick solid lines in FIG. 9, it is possible for the decoration section 139 to have, for example, a step 139A formed to fold the surface of the body section 131 (body formation member 132) on the outside, a recessed groove 139B formed to recess the surface of the body section 131 (body formation member 132) on the outside, and the like.

The rigidity of the decoration section 139 in which the step 139A and the recessed groove 139B are formed in the body section 131 (body formation member 132) is, however, relatively lower than the rigidity of each of the regions Rm in which the main engagement sections 134 are provided. That is, in the case, the low-rigidity region R is a region including the decoration section 139 in which the surface of the body section 131 (body formation member 132) corresponding to the outside of the vehicle is decorated in a state in which the body section 131 (body formation member 132) is fixed to the wheel 11. As in the embodiment described above, the sub-engagement sections 136 are thus provided even in the low-rigidity region R in which the decoration section 139 is provided to make it possible to reduce vibration, lifting, or the like. Thus, even in the case, an effect similar to the effect of the embodiment described above is obtained.

It is to be noted that FIG. 9 exemplifies a case where the through-hole 135S that is included in the hole formation section 135 to accommodate part of the fin spoke 116 is provided in addition to the decoration section 139. It is, however, possible to omit the through-hole 135S depending on the shape of a spoke provided to the disc 111. That is, needless to say, it is possible to form the decoration section 139 alone in the body section 131 (body formation member 132). In addition, FIG. 9 omits the through-holes 135K corresponding to the air openings 117. However, needless to say, it is possible to provide the through-holes 135K as necessary in addition to the decoration section 139 and provide the through-holes 135K and the through-hole 135S in addition to the decoration section 139.

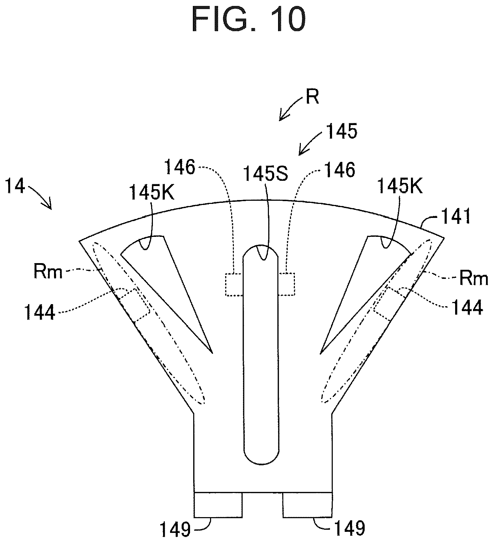

In addition, the embodiment described above has exemplified the wheel cover 13 serving as a wheel mounting member in which the (e.g., five) body formation members 132 that form the body section 131 are coupled by the coupling section 133. Instead, it is also possible to mount the accessory part 14 similar to each of the body formation members 132 according to the embodiment described above on the wheel 11 as a wheel mounting member to fill the air openings 117 of the wheel 11 as illustrated in FIG. 10.

The accessory part 14 includes a body section 141, main engagement sections 144, through-holes 145K and a through-hole 145S that form a hole formation section 145, and sub-engagement sections 146. Here, the body section 141, the main engagement section 144, the hole formation section 145, the through-hole 145K, the through-hole 145S, and the sub-engagement section 146 respectively have the same configurations as the configurations of the body formation member 132, the main engagement section 134, the hole formation section 135, the through-hole 135K, the through-hole 135S, and the sub-engagement section 136 described in the embodiment mentioned above. The body section 141, the main engagement sections 144, the hole formation section 145, the through-holes 145K, the through-hole 145S, and the sub-engagement sections 146 will thus not be described.

In addition, the accessory part 14 includes the fin spoke 116 part of which is accommodated in the through-hole 145S and fitting sections 149 that are each fitted into the fin spoke 116 on the hub attachment section 114 side. This allows the accessory part 14 to mount (fix) on (to) the disc 111 of the wheel 11, for example, by fitting the fitting sections 149 into the fin spoke 116 and then engaging the main engagement sections 144 and the sub-engagement sections 146 with the engagement target holes 118 and the engageable target sections 119, respectively.

As described above, as with the body formation member 132 described above, the rigidity of the general portion (general surface) that forms the hole formation section 145, that is, the through-holes 145K and the through-hole 145S in the body section 141 of the accessory part 14 illustrated in FIG. 10 is also relatively lower than the rigidity of each of the regions Rm in which the main engagement sections 144 are provided. That is, a region including the hole formation section 145 is also included in the low-rigidity region R in the accessory part 14. Thus, the accessory part 14 is also provided with the sub-engagement sections 146 in the low-rigidity region R including the hole formation section 145 as in the embodiment described above to make it possible to reduce vibration, lifting, or the like. Thus, even in the case, an effect similar to the effect of the embodiment described above is obtained.

Additionally, it is also possible to decorate the surface of the body section 141 corresponding to the outside in the accessory part 14 in a state in which the accessory part 14 is mounted on the wheel 11 as with the decoration section 139 including the step 139A and the recessed groove 139B described above. Then, even in the case, the sub-engagement sections 146 are provided in the decorated low-rigidity region R to make it possible to reduce vibration, lifting, or the like as in the embodiment described above.

In addition, the embodiment described above has exemplified a case where the sub-engagement sections 136 each include the abutment sections 136C. However, it is also possible to omit the abutment sections 136C from the sub-engagement sections 136 as necessary. In the case, a predetermined clearance is set between each of the engagement lugs 136B and each of the engageable target sections 119 to prevent the engagement lug 136B from abutting the engageable target section 119, that is, the fin spoke 116 in the normal state. This prevents abnormal sound caused by the abutment between the engagement lug 136B and the engageable target section 119, that is, the fin spoke 116 from being generated in the normal state. Meanwhile, it is possible to prevent the body section 131 (body formation members 132) from falling apart from the disc 111 of the wheel 11 (what is called being pulled out).

In addition, the embodiment and the modification example described above have each exemplified a case where the pair of the main engagement sections 134 or the pair of the main engagement sections 144 are provided, that is, a case where the low-rigidity region R is present between the respective regions Rm in which the pair of the main engagement sections 134 or the pair of the main engagement sections 144 are respectively provided. However, for example, in a case where the body section 131 (body formation member 132) or the body section 141 is provided with a fitting section that is fitted into the spoke 115 or the rim 112, the body section 131 (body formation member 132) or the body section 141 may be provided with one main engagement section 134 alone or one main engagement section 144 alone.

Even in the case, the region Rm in which the main engagement section 134 or the main engagement section 144 is provided and the region into which the fitting section is fitted relatively increase in rigidity. Meanwhile, the rigidity of the region (general portion) adjacent to the region Rm relatively decreases. That is, in the case, the region (general portion) adjacent to the region Rm serves as the low-rigidity region R. As in the embodiment and the modification example described above, the low-rigidity region R is therefore provided with the sub-engagement section 136 or the sub-engagement section 146 to obtain an effect similar to the effect of the embodiment described above.

Furthermore, the body section 131 (body formation members 132) that forms the wheel cover 13 according to the embodiment described above or the body section 141 that forms the accessory part 14 according to the modification example described above is respectively provided with two main engagement sections 134 or two main engagement sections 144. However, the number of main engagement sections 134 and the number of main engagement sections 144 are not limited to this. Needless to say, it is possible to provide three or more main engagement sections 134 or three or more main engagement sections 144. In the case, it is possible to dispose three or more main engagement sections 134 or three or more main engagement sections 144 in the regions Rm including the ends of the body formation member 132 or the body section 141 in the circumferential direction of the disc 111. Alternatively, it is possible to dispose three or more main engagement sections 134 or three or more main engagement sections 144 to engage at least one main engagement section 134 or at least one main engagement section 144 with an engagement target section provided to the rim 112.

Here, a vehicle wheel structure according to a first mode of the present disclosure includes: a wheel configured to support a tire and be assembled to a vehicle; and a wheel mounting member that is mounted on the wheel, in which the wheel mounting member includes a body section, a main engagement section that is provided to the body section and engages with an engagement target section of the wheel, and a sub-engagement section that engages with an engageable target section in a low-rigidity region in which rigidity relatively decreases in the body section in a case where the body section is fixed to the wheel by the main engagement section, the engageable target section being different from the engagement target section of the wheel.

In addition, a vehicle wheel structure according to a second mode of the present disclosure is the vehicle wheel structure according to the first mode in which the low-rigidity region is a region adjacent to a region in which the main engagement section is provided in the body section.

In addition, a vehicle wheel structure according to a third mode of the present disclosure is the vehicle wheel structure according to the second mode in which, in a case where the body section is provided with a pair of the main engagement sections, the low-rigidity region is present between respective regions in which the pair of the main engagement sections are respectively provided.

In addition, a vehicle wheel structure according to a fourth mode of the present disclosure is the vehicle wheel structure according to any one of the first to third modes, in which the low-rigidity region is a region including a hole formation section having a through-hole that is provided in the body section.

In addition, a vehicle wheel structure according to a fifth mode of the present disclosure is the vehicle wheel structure according to the fourth mode, in which the hole formation section has the through-hole that is provided to correspond to an air opening provided to the wheel in a state in which the body section is fixed to the wheel, the air opening causing air to flow through the air opening.

In addition, a vehicle wheel structure according to a sixth mode of the present disclosure is the vehicle wheel structure according to the fourth mode, in which the hole formation section has the through-hole that is provided to accommodate a portion of a spoke included in the wheel in a state in which the body section is fixed to the wheel.

In addition, a vehicle wheel structure according to a seventh mode of the present disclosure is the vehicle wheel structure according to any one of the first to sixth modes, in which the low-rigidity region is a region including a decoration section in which a surface of the body section is decorated in a state in which the body section is fixed to the wheel, the surface corresponding to outside of the vehicle.

In addition, a vehicle wheel structure according to an eighth mode of the present disclosure is the vehicle wheel structure according to any one of the first to seventh modes, in which the sub-engagement section includes a support section that is provided to stand with respect to the body section, an engagement lug that is supported by the support section and provided to engage with the engageable target section, and an abutment section that abuts the engageable target section more preferentially than the engagement lug in a state in which the body section is fixed to the wheel.

In addition, a vehicle wheel structure according to a ninth mode of the present disclosure is the vehicle wheel structure according to the eighth mode, in which the abutment section is a rib that is provided to couple the support section and the engagement lug.

In addition, a vehicle wheel structure according to a tenth mode of the present disclosure is the vehicle wheel structure according to any one of the first to ninth modes, in which the engagement target section is an engagement target hole having a long-hole shape, and the engagement target hole is provided to have a longitudinal direction along a radial direction of the wheel.

In addition, a vehicle wheel structure according to an eleventh mode of the present disclosure is the vehicle wheel structure according to any one of the first to tenth modes, in which the wheel mounting member is provided by using a resin material.

In addition, a vehicle wheel structure according to a twelfth mode of the present disclosure is the vehicle wheel structure according to any one of the first to eleventh modes, in which the body section is provided to cover a whole of a surface of the wheel in a state in which the body section is mounted on the wheel, the surface corresponding to the outside of the vehicle.

In addition, a vehicle wheel structure according to a thirteenth mode of the present disclosure is the vehicle wheel structure according to the twelfth mode, in which the body section includes a plurality of body formation members, and a coupling section that couples the body formation members along a circumferential direction of a disc included in the wheel in the state in which the body section is mounted on the wheel.

In addition, a vehicle wheel structure according to a fourteenth mode of the present disclosure is the vehicle wheel structure according to the thirteenth mode, in which the coupling section couples the body formation members in a middle section of the disc in the state in which the body section is mounted on the wheel.

## Claims

1. A vehicle wheel structure (10) comprising:
a wheel (11) configured to support a tire and be assembled to a vehicle; and
a wheel mounting member (13) that is mounted on the wheel (11), wherein the wheel mounting member (13) includes
a body section (131),
a main engagement section (134) that is provided to the body section (131) and engages with an engagement target section (118) of the wheel (11), and
a sub-engagement section (136) that is provided in a low-rigidity region (R) in which rigidity relatively decreases in the body section (131) in a state in which the body section (131) is fixed to the wheel (11) by the main engagement section (134), the sub-engagement section (136) engaging with an engageable target section (119) of the wheel (11), the engageable target section (119) being different from the engagement target section (118).

2. The vehicle wheel structure (10) according to claim 1, wherein the low-rigidity region (R) is a region adjacent to a region in which the main engagement section (134) is provided in the body section (131).

3. The vehicle wheel structure (10) according to claim 2, wherein, in a case where the body section (131) is provided with a pair of the main engagement sections (134), the low-rigidity region (R) is present between respective regions in which the pair of the main engagement sections (134) are respectively provided.

4. The vehicle wheel structure (10) according to claim 1, wherein the low-rigidity region (R) is a region including a hole formation section (135) having a through-hole (135K, 135S) that is provided in the body section (131).

5. The vehicle wheel structure (10) according to claim 4, wherein the hole formation section (135) has the through-hole (135K) that is provided to correspond to an air opening (117) provided to the wheel (11) in a state in which the body section (131) is fixed to the wheel (11), the air opening (117) causing air to flow through the air opening (117).

6. The vehicle wheel structure (10) according to claim 4, wherein the hole formation section (135) has the through-hole (135S) that is provided to accommodate a portion of a spoke (116) included in the wheel (11) in the state in which the body section (131) is fixed to the wheel (11).

7. The vehicle wheel structure (10) according to claim 1, wherein the low-rigidity region (R) is a region including a decoration section (139) in which a surface of the body section (131) is decorated in the state in which the body section (131) is fixed to the wheel (11), the surface corresponding to outside of the vehicle.

8. The vehicle wheel structure (10) according to claim 1, wherein the sub-engagement section (136) includes
a support section (136A) that is provided to stand with respect to the body section (131),
an engagement lug (136B) that is supported by the support section (136A) and provided to engage with the engageable target section (119), and
an abutment section (136C) that abuts the engageable target section (119) more preferentially than the engagement lug (136B) in the state in which the body section (131) is fixed to the wheel (11).

9. The vehicle wheel structure (10) according to claim 8, wherein the abutment section (136C) is a rib that is provided to couple the support section (136A) and the engagement lug (136B).

10. The vehicle wheel structure (10) according to claim 1, wherein
the engagement target section (118) is an engagement target hole having a long-hole shape, and
the engagement target hole is provided to have a longitudinal direction along a radial direction of the wheel (11).

11. The vehicle wheel structure (10) according to claim 1, wherein the wheel mounting member (13) is provided by using a resin material.

12. The vehicle wheel structure (10) according to claim 1, wherein the body section (131) is provided to cover a whole of a surface of the wheel (11) in a state in which the body section (131) is mounted on the wheel (11), the surface corresponding to outside of the vehicle.

13. The vehicle wheel structure (10) according to claim 12, wherein the body section (131) includes
a plurality of body formation members (132), and
a coupling section (133) that couples the body formation members (132) along a circumferential direction of a disc (111) included in the wheel (11) in the state in which the body section (131) is mounted on the wheel (11).

14. The vehicle wheel structure (10) according to claim 13, wherein the coupling section (133) couples the body formation members (132) in a middle section (111C) of the disc (111) in the state in which the body section (131) is mounted on the wheel (11).
